# EUROPEAN PATENT APPLICATION

(11) **EP 4 461 839 A1**
(43) Date of publication of application: **13.11.2024**
(21) Application number: 22940664.0
(22) Date of filing: 10.05.2022
(51) Int. Cl.: C22C 38/02, C22C 38/04, C22C 38/44, C22C 38/46, C22C 38/48, C22C 38/50, C21D 8/02, C22B 9/18, C22C 33/04

(54) **STEEL PLATE FOR ADVANCED NUCLEAR POWER UNIT REACTOR CORE SHELL CYLINDER AND MANUFACTURING METHOD FOR STEEL PLATE**

(30) Priority: 06.05.2022 CN 202210487713
(71) Applicant: Angang Steel Company Limited, Anshan, Liaoning 114003 (CN)
(72) Inventor: WANG, Chu, Anshan, Liaoning 114021 (CN); WANG, Yong, Anshan, Liaoning 114021 (CN); DUAN, Jiangtao, Anshan, Liaoning 114021 (CN); AI, Fangfang, Anshan, Liaoning 114021 (CN); CONG, Jingong, Anshan, Liaoning 114021 (CN); LI, Xinling, Anshan, Liaoning 114021 (CN); SUN, Diandong, Anshan, Liaoning 114021 (CN); BAI, Yupu, Anshan, Liaoning 114021 (CN); FANG, Enjun, Anshan, Liaoning 114021 (CN)
(74) Representative: Murgitroyd & Company
(86) International application number: PCT/CN2022/091894
(87) International publication number: WO 2023/212970

(57) **Abstract**

The present invention provides a steel plate for an advanced nuclear power unit reactor core shell cylinder and a manufacturing method for the steel plate. The steel plate comprises the following components in percentage by mass: 0.10%-0.14% of C, 0.20%-0.30% of Si, 0.30%-0.60% of Mn, P≤0.006%, S≤0.002%, 1.65%-1.95% of Cr, 0.80%-1.20% of Mo, 0.80%-1.20% of Ni, 0.04%-0.08% of Nb, 0.10%-0.20% of V, 0%-0.03% of Ti, 0%-0.02% of Alt, 0.001%-0.004% of Ca, 0.01%-0.03% of N, Sn≤0.001%, H≤0.0001%, and 0≤0.0020%, and the remainder being Fe and inevitable inclusions, and an anti-high-temperature tempering embrittlement coefficient J=(Si+Mn)×(P+Sn)×10⁴≤50. The steel plate and the manufacturing method therefor can ensure the comprehensive performance requirements of the steel plate for the reactor core shell cylinder.

## Description

### TECHNICAL FIELD

The present disclosure relates to the field of metal materials, and particularly relates to a steel plate for a reactor core shell cylinder of an advanced nuclear power unit and a manufacturing method thereof.

### BACKGROUND

As one of the clean and efficient energy sources in the world, nuclear energy has been used by humans for more than 70 years. Since the beginning of the 21st century, the contradiction between frequent human activities, global economic development and energy shortage, extreme climate has become increasingly prominent. In the context of globalization, the advantages of nuclear energy have become even more prominent. Therefore, the peaceful development of more advanced nuclear energy is still the trend of the times. At present, for the nuclear energy technology, after the development of the first-generation experimental prototype reactor, the second-generation pressurized water reactor, and the third-generation advanced light water reactor, the fourth-generation advanced nuclear technology involving sodium liquid-cooled fast reactor, gas-cooled fast reactor, lead liquid-cooled fast reactor, ultra-high temperature gas-cooled reactor, molten salt reactor, and supercritical water-cooled reactor has been proposed by global nuclear energy experts, becoming a development direction of nuclear power technology in the future.

The fourth-generation nuclear energy technology has the main characteristics of better safety, better economy, less nuclear waste, and effective prevention of nuclear diffusion, which puts very high requirements on nuclear technology and nuclear equipment. For example, structural steels for reactor core support at the primary nuclear part are not only exposed to high-temperature and hydrogen environment, but also subjected to intense irradiation of fast neutrons, and the risk of matrix embrittlement and decomposition water-induced hydrogen corrosion is several times that of previous generations of nuclear power units, which puts forward very high technical requirements for key materials. Therefore, the development of key core equipment and key core material meeting the requirements of the fourth-generation advanced nuclear power station has become a core problem that the nuclear power countries in the world need to solve urgently.

Prior to the present disclosure, a published invention patent (publication No. CN2009100557359.1) provides "Heat Treatment Process of Nuclear Power Reactor Pressure Vessel Reactor Core Cylinder Forgings". In terms of its disclosed composition, manufacturing method and beneficial effects, the product of the patent involves a designation of 16MND5, which is widely used in the manufacture of third-generation nuclear power equipment, with a use temperature of 350°C, and is not applicable to the fourth-generation nuclear power equipment where the temperature of use and technology requirements are higher.

The invention patent disclosed above mainly involves metal materials required for the third-generation nuclear power equipment. Compared to the key materials required for the fourth-generation nuclear power technology, the above disclosed metal materials have the characteristics of relatively low operating temperature at high-temperature, no hydrogen contact environment, short post-weld heat treatment time, and relatively single material mechanical property index. Therefore, it is urgent to develop key materials that meet the needs of key equipment of the fourth-generation nuclear power plants.

To this end, according to the technical features of the reactor core shell cylinder for the fourth-generation nuclear power equipment having high requirements on steel purity, high thermal strength and fracture toughness at 500°C, low NDT (nil-ductility transition) temperature, excellent hydrogen-induced cracking (HIC) resistance, and stable structure performance and good formability after post-weld treatment at high-temperature for long-time, the present disclosure provides a new material and a new process for key equipment of advanced nuclear power units.

### SUMMARY

In view of the above technical problems, the present disclosure provides a steel plate for a reactor core shell cylinder of an advanced nuclear power unit and a manufacturing method thereof. According to the present disclosure, a new chemical composition design and appropriate production technology are adopted. On the basis of C, Si and Mn components at low and medium contents, alloy elements of Cr, Mo, Ni, Nb, V, Ti and N are added, the contents of harmful elements of P, S, Sn and gas elements of O and H are strictly controlled; and combined with unique smelting, rolling and heat treatment processes, an excellent steel plate that can withstand 500°C high-temperature strength and has good high-temperature fracture toughness, low-temperature dart drop impact resistance and hydrogen-induced cracking resistance is obtained, meeting manufacturing and use requirements of reactor core cell cylinder for the fourth-generation nuclear power unit. The present disclosure adopts the following technical solutions:
A steel plate for a reactor core shell cylinder of an advanced nuclear power unit, including the following components in percentage by mass: 0.10%-0.14% of C, 0.20%-0.30% of Si, 0.30%-0.60% of Mn, less than or equal to 0.006% of P, less than or equal to 0.002% of S, 1.65%-1.95% of Cr, 0.80%-1.20% of Mo, 0.80%-1.20% of Ni, 0.04%-0.08% of Nb, 0.10%-0.20% of V, 0%-0.03% of Ti, 0%-0.02% of Alt, 0.001%-0.004% of Ca, 0.01%-0.03% of N, less than or equal to 0.001% of Sn, less than or equal to 0.0001% of H, less than or equal to 0.0020% of O, and balance of Fe and inevitable impurities, wherein a high-temperature tempering embrittlement resistance coefficient J is equal to (Si+Mn)×(P+Sn)×10⁴≤50.

Further, a yield strength at normal temperature as-supplied state of the steel plate satisfies 500MPa≤Rₑ₁≤520MPa, a tensile strength satisfies 610MPa≤Rₘ≤640MPa, and a tensile strength at 500°C satisfies 470MPa≤Rm≤485MPa. A tensile strength after post-weld heat treatment at 700°C for 26 h of the steel plate satisfies 450 MPa≤Rₘ, (500°C) ≤470 MPa, an impact power KV₂ at -80°C satisfies ≥420 J, a nil-ductility transition temperature (T_{NDT}) is lower than or equal to -40°C, a CSR (crack susceptibility ratio) of HIC (A solution) is 0%, and a fracture toughness K_{IC} satisfies 280MPa·m^{1/2}≤K_{IC}≤285MPa·m^{1/2}, and a steel plate for a shell cylindrical with a thickness of 40-65mm is obtained.

The principle for selection of chemical components and reasons for the content setting are as follows:
C: The main solid-solution state C and combined state C in the present disclosure ensure the high-temperature tensile strength of the steel in the heat treatment state and the post-weld heat treatment state, but excessive carbon content will affect toughness and weldability of the steel. Thus, the present disclosure defines the C content ranging from 0.10% to 0.14%.

Si: Si is a good reducing agent and a good deoxidizing agent in the steel-making process, especially when it is used in combination with Alt, which can obviously improve the deoxidizing capacity of Alt. Si forms a layer of compact oxidation-resistant SiO₂ protection film on surface at high temperature. In addition, combination of Si and Mo can form MoSi₂ which is an intermetallic compound. The atomic combination in the crystal structure of MoSi₂ exhibits the characteristics of coexistence of metal bonds and covalent bonds, showing excellent high-temperature oxidation resistance. Therefore, as a preferred implementation, the Mo/Si ratio of the present disclosure is defined to be 2.80-5.50, ensuring the formation of a certain amount of MoSi₂ structure. However, in the tempering embrittlement temperature range of 350-550°C, excessive silicon content will cause an increase of the tempering embrittlement sensitivity of steel, so the excessive addition of silicon element is not suitable in the present disclosure, and therefore, the present disclosure should not add too much silicon element, and the Si content range of the present disclosure is defined to be 0.20%-0.30%.

Mn: In the present disclosure, since the addition of deoxidizing agents such as Si, Alt is small, the addition of Mn compensates for the insufficient deoxidizing effect. In addition, as an alloy element with strong solid solution strengthening capability, Mn is used to improve the matrix strength, but Mn is a sensitive element that improves tempering brittleness, which is strictly controlled in the present disclosure. Therefore, the Mn content range is defined to be 0.30-0.60% in the present disclosure.

S and P: As harmful elements in steel, S and P must be strictly controlled to ensure comprehensive indexes such as the purity, J coefficient and fracture toughness of steel. The present disclosure defines S≤0.002% and P≤0.006%.

Cr: As a strong carbide-forming element, Cr combines with Fe, Mn, and Mo in steel to form a stable alloy carbide with a M₂₃C₆ structure, which ensures high-temperature performance in the long-term post-weld heat treatment state, and plays roles of the high-temperature oxidation resistance and oxidative corrosion resistance of Cr. However, excessive Cr content will increase the brittle transition temperature of the steel, so the Cr content range is defined to be 1.65%-1.95% in the present disclosure.

Mo: Mo can improve the hardenability of the steel and ensure the matrix strength of the steel, meanwhile, Mo is a strong carbide-forming element and can form a stable Mo₂C thermal strengthening phase with carbon elements, which plays a role in strengthening at high temperature. In addition, the steel of the present disclosure is added with more Cr elements and certain Mn elements, which are easy to co-segregate with impurity elements such as P, Sn and the like at the grain boundary, causing high-temperature tempering embrittlement and affecting the high-temperature performance of the steel. However, the effect of Mo is opposite, which promotes P to precipitate in crystal to prevent grain boundary segregation. Therefore, as a preferred implementation, the (Cr + Mn)/Mo is defined to be 1.65-2.90 in the present disclosure, so as to ensure the structural stability and the performance stability of the reactor core shell cylinder steel at the working temperature of 500°C. However, excessive Mo content leads to embrittlement of the steel, thus the Mo content range is defined to be 0.80%-1.20% in the present disclosure.

Ni: Ni in the present disclosure mainly improves the hydrogen-type corrosion resistance and the plasticity and toughness of steel, reduces the nil-ductility transition temperature of ferrite, and prevents the increase of the nil-ductility transition temperature caused by nuclear irradiation, but the radiation resistance of the material is reduced by an excessively high Ni content, so the Ni content range is defined to be 0.80%-1.20% in the present disclosure.

Nb: Nb plays a role in refining grains in the present disclosure, and improves the obdurability and the hydrogen-induced cracking resistance of steel by refining grains. In addition, Nb can also make the steel have good hydrogen resistance by consuming carbon through the formation of carbides. Therefore, the content of Nb is defined to be 0.04%-0.08%.

V: V is added in a large amount in the present disclosure, and one of the main functions is to form stable carbon and nitrogen compound with C and N elements in the long-time high-temperature post-weld tempering treatment process, ensuring the high-temperature strength in the high-temperature post-weld heat treatment state. Secondly, C is fixed by V in vanadium-carbon compounds, greatly improving the hydrogen resistance stability of the steel at high temperature and high pressure. In addition, the addition of the V alloy effectively inhibits the segregation of Cr and Mn elements induced by irradiation in grain boundaries. Therefore, the V content is defined to be 0.10-0.20% in the present disclosure.

Ti: Ti is one of the strong ferrite-forming elements, is presented as a participating or minor additive element in the present disclosure, which will strongly increases A1 and A3 temperatures of the steel if added. Ti can improve the plasticity and toughness of steel. Since titanium fixes carbon and nitrogen and forms carbon and titanium nitride, the strength of the steel is improved. After normalizing heat treatment, the crystal grains are refined and carbide is precipitated to obviously improve the plasticity and impact toughness of the steel. Therefore, the Ti content is defined to be 0-0.03% in the present disclosure.

Alt: Alt is embodied as an element to be involved or to be added in a small amount in the present disclosure, plays the role of a deoxidizer. Non-addition or small amount of Alt mainly ensures the purity of steel and prevents the generated aluminum oxide from influencing the fatigue performance of steel, so the Alt content is defined to be 0%-0.02% in the present disclosure.

Ca: The inclusions of the present disclosure are spheroidized by Ca, and the MnS inclusions are changed into CaS or composite inclusions containing CaS and the Al₂O₃ type inclusions are changed into calcium aluminate type oxide inclusions. These inclusions are spherical and are distributed in a dispersion manner, which basically do not deform at the rolling temperature of steel and are still spherical after rolling. Therefore, spheroidized treatment by Ca can reduce the sensitivity of hydrogen-induced cracking of the steel. However, excessive addition of Ca will lead to a large size of formed Ca (O, S) and an increase of the brittleness of steel, becoming a starting point of fracture crack, so that the low-temperature toughness, the extensibility and the weldability of the steel are reduced, and the purity of the steel is reduced. Therefore, the Ca content range is defined to be 0.001-0.004% in the present disclosure.

N: N forms nitride with elements such as Nb, V and the like. Nitride precipitates at the grain boundary, and pin effect of the nitride in the grain boundary refines grains, playing a role in improving the high-temperature strength of the grain boundary. Therefore, the N content is defined to be 0.01%-0.03% in the present disclosure.

Sn: Sn is a residual element in steel, not only influences the purity of the steel, but also is an important element influencing the J coefficient of the temper brittleness, thus Sn must be strictly controlled. The Sn content is defined to be ≤0.001% in the present disclosure.

H and O: As harmful gases, the existence of H and O will cause many defects. H may cause defects such as white spots or hydrogen embrittlement in steel, seriously affecting the service life of materials and the safety of equipment. O forms brittle non-metallic oxides with Al and Si elements, affecting the purity and fatigue limit performance of steel, which must be strictly controlled. Therefore, the O content is defined to be ≤0.0020% and the H content is defined to be ≤0.0001% in the present disclosure.

In order to achieve the object of the present disclosure, a technical solution is further disclosed, that is, a method for manufacturing the steel plate for a reactor core shell cylinder of an advanced nuclear power unit, including steps as follows: pretreatment of molten iron, dephosphorization in converter, decarburization in converter, external refining (LF+RH), slab continous casting, stacking for slow cooling, cleaning of casting blank, electroslag remelting, slow cooling of electroslag steel ingots, billet steel heating, rolling, thermal straightening, slow cooling, heat treatment, flaw detection, inspection and testing. The present disclosure includes main steps as follows:
1) Smelting process: Liquid steel is smelted in a converter, using high-quality scrap steel and molten iron as raw materials, with a content of the molten iron controlled to be 70-80%. Meanwhile, in order to effectively reduce the content of harmful element P, dephosphorization and decarburization are separately performed in the converter, where the time for dephosphorization oxygen blowing is controlled to be 7-10 min, the time for decarburization oxygen blowing is controlled to be 8-12 min, and the phosphorus mass fraction is ultimately reduced to less than or equal to 0.006%. Deep desulfurization is performed in a LF refining furnace, and the sulfur content is controlled to be less than or equal to 0.002%. Meanwhile, CaSi wires are fed into the steel for calcium treatment, with a wire feeding speed of 200-350 m/min and a wire feeding depth of 1.0-2.0 m below the lower slag layer. This treatment may change the form of non-metallic inclusions and forms fine ball-shaped inclusion points of CaS or calcium aluminate, which increases the equiaxed ratio of the billet steel while purifying the steel, improving the purity of steel, and improving the hydrogen resistance of steel. The thickness of the generated slag layer is 60-90 mm, ensuring that the inclusions float up fully. Degassing is completed in a RH furnace with a net cycle time of 10-15 min and a sedation time before casting of 3-5 min.
2) Casting process: The smelted liquid steel is cast, with a superheat degree of 20-30°C, by a conticaster after breaking vacuum to obtain a casting blank. The casting process should be stable and constant speed. The casting blank coming off the production line is stacked for slow cooling, with a stacking time of 36-54 h, and then is destacked at a destacking temperature of below 300°C, preventing cracks in the casting blank caused by rapid cooling.
3) Electroslag remelting process: In order to further improve the purity of the steel, eliminate internal defects such as segregation and porosity, reduce non-metallic inclusions and homogenize the as-cast structure, the electroslag remelting process is introduced, which is crucial for high-temperature performance and hydrogen-induced cracking resistance of the steel. In the present disclosure, remelted electroslag steel ingot of 300-400 mm is rolled to obtain the steel plate for a shell cylinder with a speification of smaller than or equal to 65 mm. After demoulding, the remelted electroslag steel ingot is stacked for 48-72 h for slow cooling, and then is destacked below 300°C for air cooling.
4) Heating process: By controlling the heating process for billet steel, alloy elements are fully solution strengthened and the growth of the original austenite grains is effectively inhibited. A temperature for heating the remelted electroslag steel ingots is controlled to be 1180-1250°C, a heating time is 8-10 h, and a soaking time is 0.5-1.0 h.
5) Controlled rolling process: An initial rolling temperature in the recrystallization zone is 1050-1150°C, a single-pass deformation rate in the recrystallization zone is 10-14%, a pass reduction rate of each of the first three passes is ≥12%, a total deformation rate is ≥50%, and the thickness of an intermediate billet is 2.0-4.0 times that of a finished steel plate. An initial rolling temperautre in the non-recrystallization zone is 850-900°C, a finishing rolling temperature in the non-recrystallization zone is 820-850 °C, and a cumulative deformation rate in the non-recrystallization zone is ≥50%. The above parameters is desinged based on the composition and performance requirements of steel grades. By the organic combination of micro-alloying elements of Nb, V, and Ti added to the steel with the elements of C and N, the dispersion precipitation strengthening and grain refining effects can be exerted to the maximum extent, and a relatively refined rolled structure can be obtained, providing a relatively homogeneous rolling structure for subsequent heat treatment. A thickness of the finished product is 40-65 mm.
6) Heat treatment process: In order to obtain a organizational form that meets the demanding performance requirements of the present disclosure, the heat treatment process is finally perfromed on the finished product. The present disclosure adopts multiple heat treatment processes including high-temperature normalizing, intercritical hardening and high-temperature tempering. The A_{C3} temperature of the steel grade of the present disclosure is about 870°C. The high-temperature normalizing temperature is designed according to A_{C3}+(80-130) °C, that is, 950°C-1000°C, and the holding time is 0.5 min/mm-1.0 min/mm, then air cooling is performed on the finished product to room tmeprature. This process eliminates grain differences and structural segregation caused by uneven temperature of the rolled piece. Larger grain differences and the appearance of segregation band can easily reduce the hydrogen-induced cracking resistance of the product. The intercritical hardening is performed at a temperature of 800-850 °C, with a holding time of 1.0-1.5 min/mm, a cooling rate of 5-10 °C/s and a self-tempering temperature of 350-450 °C, followed by air cooling to room temperature. By heating in a two-phase region, undissolved ferrite can be easily refined, and a biphasic structure mixed with ferrite and bainite can be obtained.

In addition, in order to achieve the excellent processing performance and service performance of the product of the present disclosure, the upper limit of tensile strength of material as heat treatment state shall not exceed 640 MPa according to the allowable design stress, meanwhile, it is necessary to ensure that the tensile strength as post-weld heat treatment state at 500°C is not less than 450 MPa. Therefore, it is necessary to further adjust and control the structural and performance through precise tempering heat treatment. The present disclosure designs a tempering temperature of 710-730°C and a holding time of 60min+(2.0-4.0) min/mm. Under the tempering process, the bainite structure is recovered and softened, and the alloy carbides with the structure of (Fe, Mn, Cr and Mo)₂₃C₆ have no aggregation and growth and are highly spheroidized and dispersed at the bainite and ferrite matrix or the grain boundaries. This microstructure has good high-temperature stability and does not change after post-weld heat treatment at 700 °C for 26 h, which can ensure the comprehensive performance of the steel plate after long-term post-weld heat treatment, especially the high-temperature strength and toughness, fracture toughness and low-temperature dart drop impact performance.

The present disclosure has the following advantages:
1. On the basis of medium-low contents of C, Si and Mn components, the contents of harmful elements of P, S and Sn and gases of O and H are strictly controlled, and the tempering embrittlement coefficient is controlled to be below 50. Through the manufacturing process of adding alloy elements Cr, Mo, Ni, Nb, V, Ti and N, a composite structure containing 10%-15% undissolved ferrite and tempered bainite is obtained, where the bainite structure contains a large number of alloy carbides with a dispersed and precipitated (Fe, Mn, Cr, Mo)₂₃C₆ structure, ensuring the radiation resistance and comprehensive mechanical performance of the steel plate for reactor core shell cylinders.
2. The mechanical properties of steel plate for reactor core shell cylinders of advanced nuclear power units obtained through the unique production process of the present invention are as follows: 500MPa≤Rₑ₁≤520MPa and 610MPa≤Rₘ≤640MPa at normal temperature as-supplied state, 470MPa≤Rₘ≤485MPa at 500°C, 450MPa≤Rₘ≤470MPa at 500°C after post-weld heat treatment at 700°C for 26 h, KV₂(80°C) ≥420J, T_{NDT}≤40°C, 0% CSR of HIC (A solution), and 280MPa·m^{1/2}≤Kic<285MPa·m^{1/2}. According to the present disclosure, a steel plate for shell cylinders with a thickness of 40-65mm is obtained, filling in the blank of such products in terms of excellent comprehensive performance and size specification.

### DETAILED DESCRIPTIONS

To make the objectives, technical solutions, and advantages of the present invention clearer, the following embodiments are set forth in conjunction with the accompanying drawings to clearly and completely describe the technical solutions in the embodiments of the present invention. Apparently, the described embodiments are merely some rather than all of the embodiments. Based on the embodiments of the present invention, all the other embodiments obtained by those of ordinary skill in the art without inventive effort are within the protection scope of the present invention.

The chemical components of the examples of the present disclosure are shown in Table 1. The corresponding process parameters of the examples are shown in Table 2. The final effects of the microstructure and property of the examples are shown in Table 3. The test results of hydrogen-induced cracking (HIC) resistance are shown in Table 4. The test results of fracture toughness at high temperature are shown in Table 5.

**Table 1 Chemical components of the examples (wt.%)**

| Example | C | Si | Mn | P | S | Cr | Mo | Ni | Nb | V |
|---|---|---|---|---|---|---|---|---|---|---|
| 1 | 0.11 | 0.23 | 0.40 | 0.006 | 0.001 | 1.65 | 1.15 | 1.10 | 0.05 | 0.20 |
| 2 | 0.13 | 0.30 | 0.38 | 0.004 | 0.002 | 1.72 | 1.11 | 0.88 | 0.06 | 0.18 |
| 3 | 0.10 | 0.20 | 0.30 | 0.005 | 0.001 | 1.88 | 0.88 | 0.95 | 0.07 | 0.13 |
| 4 | 0.12 | 0.20 | 0.59 | 0.005 | 0.001 | 1.82 | 0.90 | 1.20 | 0.08 | 0.19 |
| 5 | 0.11 | 0.22 | 0.35 | 0.005 | 0.002 | 1.65 | 1.20 | 0.90 | 0.04 | 0.14 |
| 6 | 0.13 | 0.20 | 0.60 | 0.006 | 0.001 | 1.70 | 0.80 | 1.18 | 0.05 | 0.10 |
| 7 | 0.14 | 0.21 | 0.52 | 0.006 | 0.001 | 1.95 | 1.10 | 0.80 | 0.06 | 0.18 |
| 8 | 0.13 | 0.29 | 0.55 | 0.004 | 0.001 | 1.68 | 0.88 | 1.15 | 0.08 | 0.12 |
| 9 | 0.10 | 0.24 | 0.46 | 0.005 | 0.002 | 1.75 | 0.94 | 1.20 | 0.04 | 0.17 |
| 10 | 0.11 | 0.30 | 0.33 | 0.004 | 0.001 | 1.90 | 0.86 | 0.85 | 0.07 | 0.11 |

| Example | Ti | Alt | Ca | Sn | H | N | O | J | Mo/Si | (Cr+Mn)/Mo |
|---|---|---|---|---|---|---|---|---|---|---|
| 1 | 0.03 | 0.02 | 0.002 | ≤ 0.001 | ≤0.0001 | 0.01 | 0.0018 | 44 | 5.00 | 1.78 |
| 2 | 0 | 0.01 | 0.003 | | | 0.03 | 0.0014 | 35 | 3.70 | 1.89 |
| 3 | 0.03 | 0.02 | 0.002 | | | 0.01 | 0.0020 | 30 | 4.40 | 2.48 |
| 4 | 0.02 | 0 | 0.001 | | | 0.03 | 0.0011 | 40 | 4.50 | 2.68 |
| 5 | 0.01 | 0.02 | 0.004 | | | 0.02 | 0.0016 | 34 | 5.45 | 1.67 |
| 6 | 0.02 | 0.01 | 0.004 | | | 0.02 | 0.0013 | 48 | 4.00 | 2.88 |
| 7 | 0.01 | 0.01 | 0.003 | | | 0.03 | 0.0014 | 44 | 5.24 | 2.25 |
| 8 | 0 | 0.02 | 0.003 | | | 0.01 | 0.0020 | 42 | 3.03 | 2.53 |
| 9 | 0.03 | 0 | 0.002 | | | 0.03 | 0.0015 | 42 | 3.92 | 2.35 |
| 10 | 0.02 | 0.01 | 0.001 | | | 0.02 | 0.0010 | 32 | 2.87 | 2.59 |

**Table 2 Process parameters of the examples**

| Example | 1 | 2 | 3 | 4 | 5 | 6 | 7 | 8 | 9 | 10 |
|---|---|---|---|---|---|---|---|---|---|---|
| Molten iron (mass fraction)/% | 75 | 80 | 73 | 80 | 73 | 77 | 70 | 74 | 75 | 78 |
| Dephosphorization time/min | 9 | 7 | 10 | 8 | 10 | 7 | 7 | 10 | 8 | 10 |
| Decarbonization time/min | 11 | 8 | 10 | 9 | 12 | 11 | 11 | 8 | 10 | 9 |
| CaSi wire feeding speed m/min | 300 | 215 | 350 | 330 | 220 | 255 | 200 | 280 | 250 | 245 |
| CaSi wire feeding depth/m | 1.7 | 1.1 | 2 | 1.4 | 1.3 | 1.7 | 1.2 | 1.5 | 1.6 | 1.8 |
| Thickness of generated slag layer/mm | 60 | 70 | 90 | 80 | 85 | 75 | 65 | 88 | 68 | 73 |
| Net cycle time/min | 15 | 10 | 10 | 12 | 13 | 14 | 11 | 12 | 14 | 15 |
| Sedation time/min | 3.0 | 5.0 | 4.0 | 3.0 | 4.5 | 3.5 | 3.3 | 4.6 | 4.8 | 3.2 |
| Superheat degree of pouring/°C | 20 | 25 | 25 | 30 | 23 | 28 | 22 | 21 | 24 | 29 |
| Stacking time for casting blank/h | 38 | 40 | 36 | 54 | 50 | 48 | 42 | 46 | 52 | 45 |
| Destacking temperature for casting blank/°C | 245 | 265 | 288 | 287 | 256 | 239 | 234 | 264 | 213 | 235 |
| Thickness of electroslag steel ingot/mm | 300 | 320 | 340 | 400 | 360 | 380 | 315 | 365 | 350 | 360 |
| Stacking time for electroslag steel ingot/h | 60 | 55 | 58 | 48 | 64 | 72 | 52 | 64 | 66 | 68 |
| Destacking temperature for electroslag steel ingot/°C | 226 | 235 | 265 | 283 | 245 | 237 | 275 | 275 | 295 | 245 |
| Heating temperature for electroslag steel ingot/°C | 1220 | 1200 | 1240 | 1250 | 1180 | 1210 | 1185 | 1190 | 1230 | 1245 |
| Heating time/h | 8 | 8.5 | 8.5 | 9 | 8.5 | 10 | 8.5 | 9.5 | 9 | 10 |
| Soaking time/h | 1 | 0.9 | 1 | 0.5 | 1 | 0.6 | 0.8 | 0.5 | 0.7 | 0.6 |
| Initial rolling temperature in recrystallization zone/°C | 1100 | 1140 | 1120 | 1050 | 1150 | 1080 | 1060 | 1125 | 1105 | 1135 |
| Reduction rate of first pass in recrystallization zone/% | 13 | 12 | 14 | 12 | 13 | 14 | 13 | 12 | 13 | 14 |
| Reduction rate of second pass in recrystallization zone/% | 13 | 14 | 13 | 14 | 12 | 12 | 13 | 14 | 13 | 12 |
| Reduction rate of third pass in recrystallization zone/% | 12 | 13 | 14 | 12 | 13 | 13 | 13 | 12 | 14 | 12 |
| Total deformation rate in recrystallization zone/% | 57 | 53 | 65 | 73 | 56 | 69 | 64 | 54 | 53 | 58 |
| Thickness ratio of intermediate billet to finished product | 2.0 | 3.0 | 4.0 | 2.0 | 4.0 | 2.0 | 2.5 | 3.5 | 3.0 | 2.5 |
| Initial rolling temperature in non-recrystallization zone/°C | 871 | 889 | 900 | 878 | 855 | 869 | 850 | 861 | 881 | 895 |
| Finishing rolling temperature in non-recrystallization zone/°C | 840 | 846 | 850 | 843 | 820 | 837 | 821 | 834 | 845 | 848 |
| Total deformation rate in non-recrystallization zone/% | 50 | 67 | 75 | 50 | 75 | 50 | 60 | 71 | 67 | 60 |
| Thickness of finished product/mm | 65 | 50 | 40 | 55 | 40 | 58 | 45 | 48 | 55 | 60 |
| Temperature of high-temperature normalizing/°C | 990 | 960 | 980 | 950 | 1000 | 970 | 960 | 975 | 985 | 995 |
| Holding time/min/mm | 0.5 | 0.8 | 1.0 | 0.5 | 1.0 | 0.8 | 0.7 | 0.6 | 0.6 | 0.7 |
| Intercritical hardening temperature/°C | 825 | 845 | 835 | 810 | 850 | 800 | 815 | 820 | 830 | 805 |
| Holding time/min/mm | 1.0 | 1.3 | 1.5 | 1.2 | 1.5 | 1.0 | 1.1 | 1.4 | 1.3 | 1.4 |
| Cooling rate/°C/s | 10 | 8 | 5 | 10 | 5 | 8 | 7 | 6 | 9 | 9 |
| Self-tempering temperature/°C | 423 | 441 | 447 | 355 | 385 | 398 | 350 | 450 | 432 | 376 |
| Tempering temperature/°C | 720 | 710 | 715 | 730 | 715 | 720 | 725 | 713 | 724 | 728 |
| Total holding time/min | 190 | 210 | 220 | 225 | 220 | 210 | 190 | 220 | 230 | 240 |

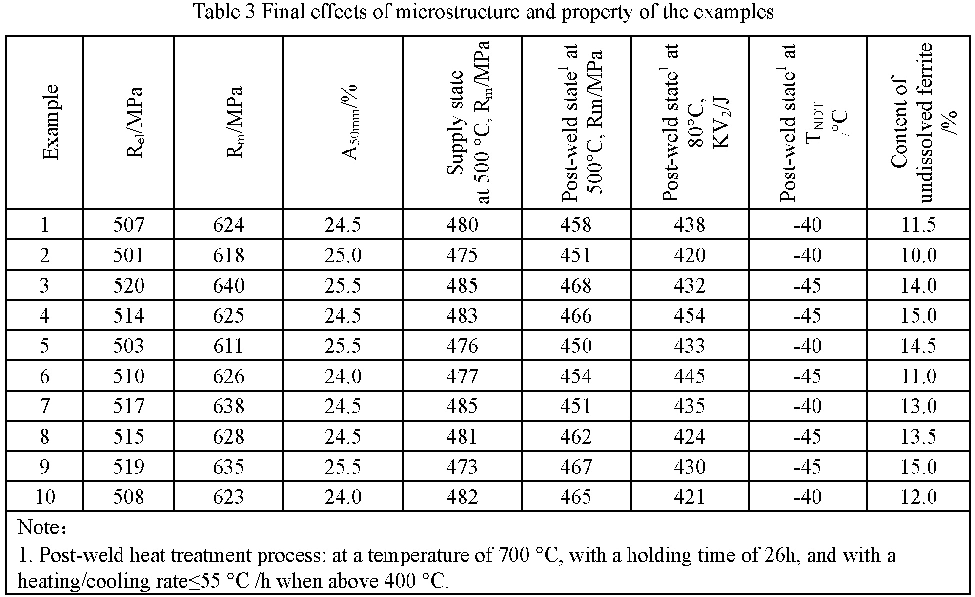

**Table 4 Test results of HIC resistance of the examples**

| Example | Sample status | CLR/% | CTR/% | CSR/% |
|---|---|---|---|---|
| 1 | Post-weld heat treatment | 0 | 0 | 0 |
| 2 | Post-weld heat treatment | 0 | 0 | 0 |
| 3 | Post-weld heat treatment | 0 | 0 | 0 |
| 4 | Post-weld heat treatment | 0 | 0 | 0 |
| 5 | Post-weld heat treatment | 0 | 0 | 0 |
| 6 | Post-weld heat treatment | 0 | 0 | 0 |
| 7 | Post-weld heat treatment | 0 | 0 | 0 |
| 8 | Post-weld heat treatment | 0 | 0 | 0 |
| 9 | Post-weld heat treatment | 0 | 0 | 0 |
| 10 | Post-weld heat treatment | 0 | 0 | 0 |
| Note: | | | | |
| 1. CLR-crack length ratio, CTR-crack thickness ratio, and CSR-crack susceptibility ratio. | | | | |
| 2. Executive standard: GB/T 8650 (A solution). | | | | |
| 3. Post-weld heat treatment process: at a temperature of 700 °C, with a holding time of 26h, and with a heating-cooling rate≤55 °C /h when above 400 °C. | | | | |

**Table 5 Test results of fracture toughness at high temperature of the examples**

| Example | Sample status | Test temperature/°C | K_{IC}/MPa·m^{1/2} |
|---|---|---|---|
| 1 | Post-weld heat treatment | 500 | 284 |
| 2 | Post-weld heat treatment | 500 | 285 |
| 3 | Post-weld heat treatment | 500 | 285 |
| 4 | Post-weld heat treatment | 500 | 282 |
| 5 | Post-weld heat treatment | 500 | 288 |
| 6 | Post-weld heat treatment | 500 | 285 |
| 7 | Post-weld heat treatment | 500 | 282 |
| 8 | Post-weld heat treatment | 500 | 283 |
| 9 | Post-weld heat treatment | 500 | 282 |
| 10 | Post-weld heat treatment | 500 | 281 |

As shown in the above results, the steel plate for reactor core shell cylinders of advanced nuclear power units provided by the present disclosure has high internal purity, extremely low content of harmful elements P and S, and a high-temperature tempering embrittlement resistance coefficient J≤50; 500MPa≤Rₑ₁≤520MPa and 610MPa≤Rₘ≤640MPa at normal temperature as-supplied state, 470MPa≤Rₘ≤485MPa at 500°C, 450MPa<Rₘ<470MPa at 500°C after post-weld heat treatment at 700 °C for 26 h, KV₂(80 °C) ≥420J, T_{NDT} ≤-40 °C, 0% CSR of HIC (A solution), and 280MPa·m^{1/2}≤K_{IC}≤285MPa·m^{1/2}.

At last, it should be noted that the above various embodiments are merely intended to illustrate the technical solution of the present invention and not to limit the same; although the present invention has been described in detail with reference to the foregoing embodiments, it should be understood by those ordinary skilled in the art that the technical solutions described in the foregoing embodiments can be modified or equivalents can be substituted for some or all of the technical features thereof; and the modification or substitution does not make the essence of the corresponding technical solution deviate from the scope of the technical solution of each embodiment of the present invention.

## Claims

1. A steel plate for a reactor core shell cylinder of an advanced nuclear power unit, comprising the following components in percentage by mass: 0.10%-0.14% of C, 0.20%-0.30% of Si, 0.30%-0.60% of Mn, less than or equal to 0.006% of P, less than or equal to 0.002% of S, 1.65%-1.95% of Cr, 0.80%-1.20% of Mo, 0.80%-1.20% of Ni, 0.04%-0.08% of Nb, 0.10%-0.20% of V, 0%-0.03% of Ti, 0%-0.02% of Alt, 0.001%-0.004% of Ca, 0.01%-0.03% of N, less than or equal to 0.001% of Sn, less than or equal to 0.0001% of H, less than or equal to 0.0020% of O, and balance of Fe and inevitable impurities, wherein a high-temperature tempering embrittlement resistance coefficient J is equal to (Si+Mn)×(P+Sn)×10⁴≤(50.

2. The steel plate for a reactor core shell cylinder of an advanced nuclear power unit according to claim 1, wherein a yield strength at normal temperature as-supplied state of the steel plate satisfies 500MPa≤Rₑ₁≤520MPa, a tensile strength satisfies 610MPa≤Rₘ≤640MPa, and a tensile strength at 500°C satisfies 470MPa≤Rₘ≤485MPa.

3. The steel plate for a reactor core shell cylinder of an advanced nuclear power unit according to claim 1, wherein a tensile strength at 500°C after post-weld heat treatment at 700°C for 26 h satisfies 450MPa≤Rₘ≤470MPa, an impact power KV₂ at 80°C is higher than or equal to 420J, a nil-ductility transition temperature T_{NDT} is lower than or equal to -40°C, a CSR of HIC A solution is 0%, and a fracture toughness K_{IC} satisfies 280MPa·m^{1/2}≤K_{IC}≤285MPa·m^{1/2}.

4. The steel plate for a reactor core shell cylinder of an advanced nuclear power unit according to claim 1, wherein a structure containing 10-15% undissolved ferrite and tempered bainite is obtained, wherein the bainite structure comprises an alloy carbide with a dispersed precipitates M₂₃C₆ structure, of which M is a combination of Fe, Mn, Cr and Mo.

5. The steel plate for a reactor core shell cylinder of an advanced nuclear power unit according to claim 1, wherein Mo/Si is 2.80-5.50, and (Cr+Mn)/Mo is 1.65-2.90.

6. A method for manufacturing the steel plate for a reactor core shell cylinder of an advanced nuclear power unit according to any one of claims 1 to 5, comprising a smelting process, a casting process, an electroslag remelting process, a heating process, a rolling process, and a heat treatment process, with the following steps of:
1) smelting process: performing deep desulfurization treatment to liquid steel in a LF refining furnace, controlling a sulfur content to be less than or equal to 0.002%, while feeding CaSi wires into the steel for calcium treatment;
a thickness of a generated slag layer is 60-90 mm;
performing degassing in a RH furnace with a net cycle time of 10-15 min and a sedation time before casting of 3-5 min;
2) casting process: casting, with a superheat degree of 20-30°C, the smelted liquid steel by a conticaster at a constant speed after breaking vacuum to obtain a casting blank; stacking the casting blank coming off a production line for slow cooling, and then destacking it at a preset temperature;
3) electroslag remelting process: rolling with a 300-400 mm remelted electroslag steel ingot to obtain a steel plate for an shell cylinder with a specification of smaller than or equal to 65 mm; stacking the remelted electroslag steel ingot for slow cooling after demoulding, and then destacking it at a preset temperature;
4) heating process: controlling a temperature for heating the remelted electroslag steel ingot to be 1180-1250°C, a heating time to be 6-8 h, and a soaking time to be 0.5-1.0 h;
5) rolling process: rolling with an initial rolling temperature of 1050-1150°C in a recrystallization zone, a single-pass deformation rate of 10-14% in the recrystallization zone, a reduction rate of each of the first three passes of ≥12%, a total deformation rate of ≥50%, and a thickness of an intermediate billet of 2.0-4.0 times that of a finished steel plate, and rolling with an initial rolling temperature of 850-900°C in a non-recrystallization zone, a finishing rolling temperature of 820-850°C in the non-recrystallization zone, and a cumulative deformation rate of ≥50% in the non-recrystallization zone, wherein a thickness of the finished product after rolling is 40-65 mm;
6) heat treatment process: performing high-temperature normalizing to the finished product at a temperature of Ac3+(80-130) °C, with a holding time of 0.5-1.0 min/mm, and then performing air cooling to room temperature;
performing intercritical hardening to the finished product at a temperature of 800-850°C, with a holding time of 1.0-1.5 min/mm, a cooling rate of 5-10°C/S, a self-tempering temperature of 350-450°C, and then performing air cooling to room temperature; and
performing high-temperature tempering heat treatment.

7. The method according to claim 6, wherein in the smelting process, liquid steel is smelted in a converter, and melted iron and scrap steel are used as raw materials, wherein a content of the melted iron is controlled to be 70-80%; and
dephosphorization and decarburization are separately performed in the converter, wherein a time for dephosphorization oxygen blowing ranges from 7 min to 10 min, a time for decarburization oxygen blowing ranges from 8 min to 12 min, and a mass fraction of phosphorus is ultimately reduced to less than or equal to 0.006%.

8. The method according to claim 6, wherein during the calcium treatment of the smelting process, a wire feeding speed is 200-350 m/min, and a wire feeding depth is 1.0-2.0 m below the slag layer.

9. The method according to claim 6, wherein in the casting process, a stacking time for slow cooling is 36-54 h, and a destacking temperature is below 300°C; and
in the electroslag remelting process, a stacking time for slow cooling after the electroslag steel ingots are demoulded is 48-72 h, and the destacking is performed below 400°C for air cooling.

10. The method according to claim 6, wherein process parameters of the high-temperature tempering heat treatment are as follows: a tempering temperature of 710-730°C and a holding time of 60 min + 2.0-4.0 min/mm.
